# FASCICULE DE BREVET EUROPEEN

(11) **EP 1 276 197 B1**
(45) Date de publication et mention de la délivrance du brevet: **12.11.2014**
(21) Numéro de dépôt: 02291602.7
(22) Date de dépôt: 27.06.2002
(51) Int. Cl.: H02G 3/06

(54) **Accessoire pour goulotte à tronçons de hauteurs différentes**
Zusatz für Kabelrinnen mit Abschnitten unterschiedlicher Höhe
Accessory for ducts with sections having different heights

(30) Priorité: 13.07.2001 FR 0109377
(43) Date de publication de la demande: 15.01.2003
(73) Titulaire: Legrand France, 87000 Limoges (FR); Legrand SNC, 87000 Limoges (FR)
(72) Inventeur: Jadaud, Alain, 72240 Tennie (FR); Decore, Raphael, 72130 Saint Aubin Le Locquenay (FR)
(74) Mandataire: Santarelli

(56) Documents cités:
- EP-A- 0 776 078

## Description

La présente invention concerne une goulotte présentant au moins deux tronçons juxtaposés de hauteurs différentes, ladite goulotte comprenant au moins un socle pourvu de deux ailes latérales dont les retours, dirigés l'un vers l'autre, comportent des moyens de montage d'un tronçon de couvercle.

On entend ici, par la hauteur d'un tronçon de goulotte, son épaisseur ou sa profondeur correspondant à la hauteur de ses parois latérales.

On entend également ici, par tronçons juxtaposés, des tronçons qui se succèdent l'un à l'autre sans être forcément accolés de sorte qu'ils peuvent être éventuellement séparés par une platine.

Il peut être intéressant de modifier la hauteur d'une goulotte sur son parcours pour notamment diminuer le coût d'une installation électrique puisque, en tête d'une installation électrique, il peut s'avérer nécessaire de disposer de goulottes de grandes hauteurs pour loger l'ensemble des câbles et/ou des conducteurs d'alimentation électriques de l'installation, alors que, lorsqu'on se rapproche des extrémités de l'installation, les goulottes utilisées peuvent présenter des petites hauteurs, et plus généralement des petites dimensions.

Il peut en outre être intéressant de changer la hauteur d'une goulotte pour localement loger dans celle-ci un appareillage électrique au-dessus du volume prévu dans ladite goulotte pour le passage des câbles et/ou des conducteurs d'alimentation électrique sans pénaliser ce dernier.

On connaît déjà un accessoire de jonction destiné à établir une continuité entre des tronçons de goulotte de hauteurs différentes. Cet accessoire est une pièce moulée ou chaudronnée ayant l'aspect général d'un cache avec une partie d'obturation de chaque tronçon de goulotte bordée par des jupes latérales, et dont chaque extrémité présente les dimensions d'un des deux tronçons de goulotte pour s'y raccorder.

Le document EP0776078 présente un accessoire de dérivation pour profilé électrique comportant, d'une part, deux joues formées chacune de deux bras en équerre, l'un frontal, l'autre latéral, et reliées l'une à l'autre par une poutre dans leur zone d'angle, et, d'autre part, deux panneaux de fermeture, l'un frontal, l'autre latéral, qui s'étendent chacun respectivement entre les deux bras des joues, et dont un au moins est affecté d'un réseau quadrillé de lignes de moindre résistance propres à permettre d'y découper, à la demande, le long de son bord libre opposé à la poutre, une encoche de contour quadrangulaire.

Par rapport à l'état de la technique précité, la présente invention propose un nouvel accessoire qui est peu coûteux à réaliser, qui est adaptable à des goulottes dont les socles sont composables ou monobloc, qui peut jouer le rôle d'un élément de jonction de deux socles de hauteurs différentes ou le rôle d'un élément de rehausse d'un seul socle, et dont la mise en oeuvre est simple et rapide tout en permettant d'obtenir une esthétique soignée de l'installation ainsi qu'un accès limité aux différents compartiments de la goulotte lorsque celle-ci est compartimentée.

Plus particulièrement l'invention propose une goulotte présentant au moins deux tronçons juxtaposés de hauteurs différentes, ladite goulotte comprenant au moins un socle pourvu de deux ailes latérales dont les retours, dirigés l'un vers l'autre, comportent des moyens de montage d'un tronçon de couvercle, la goulotte comprenant au moins deux joues rapportées sur lesdites ailes latérales parallèles, chaque joue comportant des moyens de montage d'un tronçon de couvercle qui s'étendent suivant une ligne présentant au moins deux courbures inversées pour établir une continuité entre des moyens de montage d'un tronçon de couvercle situés à deux hauteurs différentes, ladite goulotte comprenant en outre un tronçon de couvercle monté sur lesdites joues, de sorte que la marche formée entre lesdits tronçons juxtaposés de hauteurs différentes et une partie de ces derniers sont fermés par un seul tronçon de couvercle sans interruption ni arête ou pliure au niveau de ladite marche. Selon un premier mode de réalisation de la goulotte conforme à l'invention, lesdites courbures inversées sont adjacentes.

Selon un deuxième mode de réalisation de la goulotte conforme à l'invention, lesdites courbures inversées sont séparées l'une de l'autre par une portion rectiligne.

Selon une variante de réalisation de la goulotte conforme à l'invention, celle-ci est établit une continuité entre deux tronçons de goulotte de hauteurs différentes comportant chacun un socle pourvu de deux ailes latérales, et, pour ce faire, chaque joue comprend des moyens de montage et est rapportée sur lesdits socles à la jonction de deux ailes latérales juxtaposées de hauteurs différentes, chaque joue assurant une continuité de paroi entre lesdites ailes latérales, et établissant une continuité entre les moyens de montage d'un tronçon de couvercle prévus sur les retours desdites ailes latérales situés à des hauteurs différentes.

Selon une autre variante de réalisation de l'accessoire conforme à l'invention, il comprend au moins deux rehausses comportant chacune un retour comprenant des moyens de montage d'un tronçon de couvercle et des moyens de montage sur une aile latérale du socle de la goulotte lesdites rehausses surélevant ladite aile latérale et formant localement un tronçon de goulotte de hauteur supérieure à la hauteur dudit socle, lesdites joues comprenant des moyens de montage sur lesdites ailes latérales et sur lesdites rehausses de telle sorte que chaque joue établit une continuité de paroi entre une aile latérale du socle de la goulotte et une rehausse ainsi qu'une continuité entre les moyens de montage d'un tronçon de couvercle d'un retour d'une rehausse et les moyens de montage d'un tronçon de couvercle d'un retour d'une aile latérale, situés à des hauteurs différentes.

Avantageusement, selon cette variante de réalisation, la goulotte peut comprendre, d'une part, une pluralité de rehausses de longueurs différentes montées les unes sur les autres pour former une paroi de rehausse de forme globalement pyramidale avec la formation d'une marche à chaque jonction entre une première rehausse et une deuxième rehausse de plus courte longueur, cette paroi de rehausse comprenant des moyens de montage d'un tronçon de couvercle et des moyens de montage sur une aile latérale du socle de la goulotte surélevant ladite aile latérale, et, d'autre part, une pluralité de joues, chaque joue établissant une continuité entre deux rehausses successives de longueurs différentes.

Selon une autre variante de réalisation de la goulotte conforme à l'invention, chaque joue comprend, d'une part, des moyens de montage d'un tronçon de couvercle qui s'étendent suivant une ligne présentant, à chaque extrémité, deux courbures inversées et, entre ses deux extrémités, un trajet rectiligne, et, d'autre part, des moyens de montage sur une aile latérale du socle de la goulotte surélevant ladite aile latérale et formant localement un tronçon de goulotte de hauteur supérieure à la hauteur dudit socle de la goulotte, en assurant entre les deux hauteurs de tronçons de goulotte une continuité de moyens de montage d'un tronçon de couvercle.

Selon une autre variante de réalisation de la goulotte selon l'invention, elle comporte une autre joue établissant une continuité de paroi entre deux cloisons de fractionnement de hauteurs différentes rapportées sur le fond de chaque socle de la goulotte, cette autre joue comportant un bandeau assurant une continuité de paroi entre des retours desdites cloisons de fractionnement dans lesquelles sont montés les tronçons de couvercle de fermeture des compartiments de chaque socle, ledit bandeau comprenant des moyens de montage desdits tronçons de couvercle s'étendant selon une ligne présentant au moins deux courbures inversées établissant une continuité entre des moyens de montage d'un tronçon de couvercle situés à deux hauteurs différentes et permettre la fermeture de la marche formée entre les tronçons de goulotte de hauteurs différentes et d'une partie de chaque couple de compartiments aboutés desdits tronçons de goulotte par un seul tronçon de couvercle sans interruption ni arête ou pliure dans ladite marche.

D'autres caractéristiques non limitatives et avantageuses de la goulotte selon l'invention sont les suivantes :
- lesdits moyens de montage d'un tronçon de couvercle prévus sur chaque joue sont sensiblement identiques aux moyens de montage d'un tronçon de couvercle prévus sur lesdits retours desdites ailes latérales ou des cloisons de fractionnement de chaque socle de la goulotte ;
- lesdits moyens de montage d'un tronçon de couvercle prévus sur chaque rehausse sont sensiblement identiques aux moyens de montage d'un tronçon de couvercle prévus sur les retours des ailes latérales du socle de la goulotte ;
- lesdits moyens de montage d'un tronçon de couvercle prévus sur lesdites joues comprennent des moyens d'engagement dudit tronçon de couvercle ;
- lesdits moyens d'engagement comprennent pour chaque joue une rainure qui assure une continuité de rainures prévues sur des retours situés à des hauteurs différentes ;
- lesdits moyens de montage d'un tronçon de couvercle prévus sur chaque joue comprennent des moyens d'encliquetage dudit tronçon de couvercle ; lesdits moyens d'encliquetage comprennent, pour chaque joue, un bourrelet d'encliquetage qui assure une continuité de bourrelets d'encliquetage entre des bourrelets d'encliquetage prévus sur des retours situés à des hauteurs différentes ;les moyens de montage des joues sur les ailes latérales du socle de la goulotte sont identiques aux moyens de montage d'un tronçon de couvercle sur les retours des ailes latérales du socle de ladite goulotte ;
- les moyens de montage de chaque rehausse sur une aile latérale du socle de la goulotte sont sensiblement identiques aux moyens de montage d'un tronçon de couvercle sur les retours d'une aile latérale du socle de la goulotte ; et
- chaque joue présente une hauteur modifiable par découpage d'une partie de cette dernière suivant une ligne de découpe déterminée de façon à pouvoir adapter la hauteur de chaque joue à celles des ailes latérales des tronçons de goulotte de différentes hauteurs.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective d'un premier mode de réalisation d'une goulotte pourvue d'un accessoire selon l'invention ;
- la figure 2 est une vue schématique en perspective éclatée du mode de réalisation d'une goulotte pourvue d'un accessoire selon l'invention ;
- la figure 3 est une vue en perspective assemblée de la goulotte représentée sur la figure 2 ;
- la figure 4 est une vue schématique en perspective éclatée d'un deuxième mode de réalisation d'une goulotte pourvue de l'accessoire représenté sur la figure 2 ;
- la figure 5 est une vue en perspective assemblée de la goulotte représentée sur la figure 4 ;
- la figure 6 est une vue schématique en perspective éclatée d'un troisième mode de réalisation d'une goulotte pourvue d'une variante de réalisation de l'accessoire selon l'invention ;
- la figure 7 est une vue en perspective assemblée de la goulotte représentée sur la figure 6 ;
- la figure 8 est une vue en perspective assemblée d'une variante de réalisation de la goulotte représentée sur la figure 7 comportant l'accessoire représenté sur la figure 7 ;
- la figure 9 est une vue schématique en perspective éclatée de la goulotte représentée sur la figure 6 pourvue d'une autre variante de l'accessoire selon l'invention ;
- la figure 10 est une vue en perspective éclatée d'une goulotte comprenant un socle monobloc pourvu d'une autre variante de réalisation de l'accessoire selon l'invention ;
- la figure 11 est une vue en perspective assemblée de la goulotte représentée sur la figure 10 ;
- la figure 12 est une vue en perspective assemblée de la variante composable de la goulotte représentée sur la figure 11 comprenant l'accessoire représenté sur la figure 11 ;
- la figure 13 est une vue en perspective assemblée de la goulotte représentée sur la figure 5 avec une variante de réalisation de l'accessoire selon l'invention ;
- la figure 14 est une vue de dessous d'une partie d'un tronçon de couvercle préférentiellement utilisé pour les goulottes représentées sur les figures 1 à 13 ;
- la figure 15 est une vue en perspective d'une variante de réalisation de l'accessoire selon l'invention ; et
- la figure 16 est une vue de derrière de l'accessoire de la figure 15.

En préliminaire, on notera que, d'une figure à l'autre, les éléments identiques ou similaires des différents modes de réalisation représentés seront, dans la mesure du possible, référencés par les mêmes signes de référence et ne seront pas décrits à chaque fois.

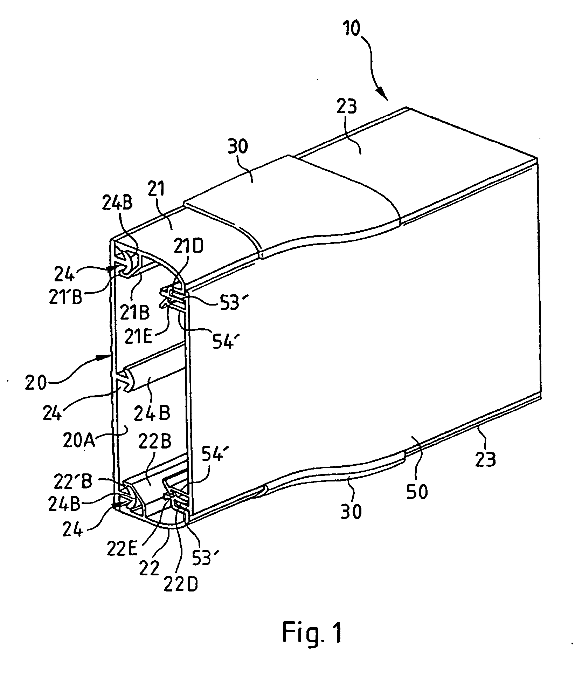

Sur les figures 1 à 3, on a représenté une goulotte 10 composable comprenant un socle 20 formé par l'assemblage d'un fond 20A et de parois longitudinales 21, 22, 23 à l'aide de moyens d'assemblage coopérant entre eux. Lesdites parois longitudinales 21, 22, 23 constituent ici les ailes latérales de la goulotte 10.

Le fond 20A porte, à proximité de chacun de ses bords d'extrémité longitudinaux, une nervure longitudinale 24 qui présente une section globalement en T avec une âme 24A et deux ailes 24B inclinées par rapport à l'âme 24A en direction de son pied.

En outre, le fond 20A du socle 20 de la goulotte 10 comporte, en son milieu, une autre nervure longitudinale 24 identique à celle située à proximité de ses bords d'extrémité longitudinaux, et pouvant servir avantageusement au montage d'une cloison de séparation ou de fractionnement de l'espace intérieur du socle de la goulotte.

Chaque paroi longitudinale 21, 22, 23 comporte, à une extrémité libre destinée à venir en appui contre le fond 20A du socle 20 de la goulotte 10, une pince présentant deux branches 21A, 21 B; 22A, 22B ; 23A, 23B, chaque branche 21A, 21B ; 22A, 22B ; 23A, 23B portant, à son extrémité libre, un bourrelet d'encliquetage 21'A, 21'B ; 22'A, 22'B ; 23'A, 23'B, pour son accrochage sur les ailes 24B inclinées de la nervure longitudinale 24 correspondante.

A cet effet, au moins une desdites branches 21B, 22B, 23B de la pince de chaque paroi longitudinale 21, 22, 23 est déformable élastiquement pour autoriser l'encliquetage de ladite pince sur lesdites ailes 24B inclinées de la nervure longitudinale 24 portée par le fond 20A.

Plus particulièrement, une desdites branches 21A, 22A, 23A de la pince de chaque paroi longitudinale 21, 22, 23 s'étend dans le prolongement de cette dernière en en constituant une partie, elle est donc relativement rigide, et l'autre desdites branches 21B, 22B, 23B de la pince de chaque paroi longitudinale 21, 22, 23 est constituée par un jambage en forme de crochet présentant une certaine déformabilité élastique. Ce jambage 21B, 22B, 23B de la pince de chaque paroi longitudinale 21, 22, 23 est porté par une face, ici la face intérieure, de la paroi longitudinale 21, 22, 23 correspondante.

En outre, les ailes 24B de chaque nervure longitudinale 24 sont inclinées selon des directions divergentes formant un angle aigu avec la direction selon laquelle s'étend l'âme 24A de la nervure longitudinale 24.

Ici, les ailes 24B de chaque nervure longitudinale 24 présentent des profils courbes qui se raccordent continûment au sommet de ladite nervure longitudinale de telle sorte qu'elles forment ici avantageusement une surface convexe orientée dans une direction opposée au pied de la nervure longitudinale 24. Cette surface convexe constitue, lors de la mise en place de chaque paroi longitudinale 21, 22, 23 sur le fond 20A du socle 20 de la goulotte 10, une surface d'écartement des branches 21A, 21B ; 22A, 22B ; 23A, 23B de la pince située à l'extrémité libre de chaque paroi longitudinale, provoquant la déformation d'au moins une desdites branches et facilitant l'encliquetage de chaque pince sur les ailes 24B de la nervure longitudinale 24.

En outre, les parois longitudinales 21, 22, 23 qui constituent les ailes latérales du socle 20 de la goulotte 10 composable présentent, à leur autre extrémité libre, un retour 21C, 22C, 23C orienté en direction de l'intérieur du socle 20 de la goulotte 10 et comprenant des moyens de montage d'un tronçon de couvercle 50 de ladite goulotte.

Les retours 21C, 23C, 22C des ailes latérales du socle 20 de la goulotte 10 sont alors dirigés l'un vers l'autre, à l'équerre par rapport auxdites ailes latérales.

Ici, ces moyens de montage comprennent, pour chaque paroi longitudinale 21, 22, 23, une rainure 21D, 22D, 23D formée dans le retour 21C, 22C, 23C de la paroi longitudinale 21, 22, 23 correspondante, dans laquelle vient s'engager une languette d'engagement longitudinale 53' portée par le tronçon de couvercle 50 à proximité de chaque bord longitudinal, ainsi qu'un bourrelet d'encliquetage 21E, 22E, 23E situé sur le bord externe de chaque rainure 21D, 22D, 23D et sur lequel vient s'accrocher une dent d'encliquetage portée par une languette d'encliquetage longitudinale 54' portée par le tronçon de couvercle 50 à proximité de chaque languette d'engagement longitudinale 53'.

Pour limiter un éventuel enfoncement du tronçon de couvercle 50 lorsqu'un effort est exercé sur celui-ci, chaque languette d'engagement longitudinale 53' du tronçon de couvercle 50 présente une longueur telle que son extrémité libre peut prendre appui sur le fond de ladite rainure 21D, 22D, 23D formée dans le retour 21C, 22C, 23C correspondant de la paroi longitudinale 21, 22, 23 correspondante.

Les tronçons de couvercle 50 représentés sur les figures 1 à 3 sont ici préformés selon un profil courbe pour pouvoir fermer deux tronçons juxtaposés de hauteurs différentes de ladite goulotte 10 en se montant dans les moyens de montage des différentes parois longitudinales 21, 22, 23 situés à des hauteurs différentes.

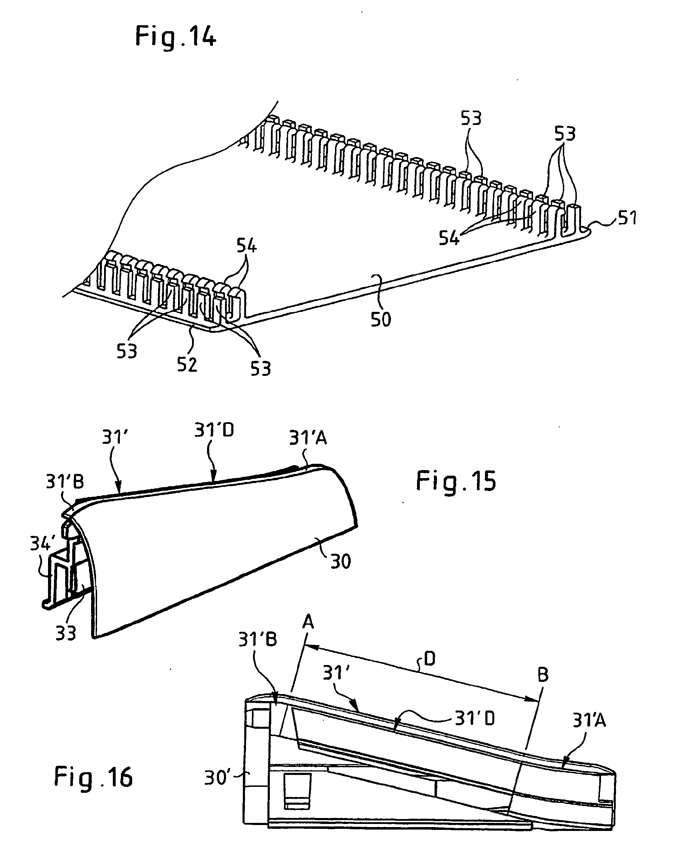

Toutefois, selon un mode de réalisation préféré du tronçon de couvercle 50 représenté sur la figure 14, celui-ci comporte, à proximité de chacun de ses bords d'extrémité longitudinaux 51, 52, une série de languettes d'engagement 53. Chaque série de languettes d'engagement 53 s'étend le long de chaque bord d'extrémité longitudinal 51, 52 et chaque languette d'engagement 53 s'étend, elle, perpendiculairement au plan dudit tronçon de couvercle 50.

Chaque série de languettes d'engagement 53 est destinée à s'engager comme la languette d'engagement longitudinale 53' dans chaque rainure 21D, 22D, 23D formée à l'extrémité de chaque retour 21C, 22C, 23C de chaque aile latérale du socle 20 de la goulotte 10.

En outre, le tronçon de couvercle 50 représenté sur la figure 14 comporte, du côté intérieur de chaque série de languettes d'engagement 53, et à proximité de celle-ci, une série de languettes d'encliquetage 54. Chaque série de languettes d'encliquetage 54 s'étend parallèlement à chaque série de languette d'engagement 53, et chaque languette d'encliquetage 54 s'étend perpendiculairement au plan du tronçon de couvercle 50.

Chaque languette d'encliquetage 54 comporte, à son extrémité libre, une dent d'encliquetage.

Chaque série de languette d'encliquetage 54 est destinée à s'accrocher sur chaque bourrelet d'encliquetage 21E, 22E, 23E correspondant de chaque paroi longitudinale 21, 22, 23 constituant les ailes latérales du socle 20 de la goulotte 10.

Le tronçon de couvercle 50 ainsi agencé, et tel que représenté sur la figure 14, présente avantageusement une certaine flexibilité pour pouvoir être adapté à une configuration de rainures et de bourrelets d'encliquetage présentant un trajet courbe selon des rayons de courbure déterminés, tel que cela sera explicité ultérieurement.

En outre, la goulotte 10 représentée sur la figure 1 comporte deux tronçons juxtaposés de hauteurs différentes. Un premier tronçon de la goulotte 10 est formé par l'assemblage des parois longitudinales 21, 22 avec le fond 20A du socle 20, ces parois longitudinales 21, 22 présentant une première hauteur. Le deuxième tronçon juxtaposé présente une plus grande hauteur et est formé par l'assemblage des parois longitudinales 23 avec le fond 20A du socle 20, ces parois longitudinales 23 présentant une deuxième hauteur supérieure à la première hauteur.

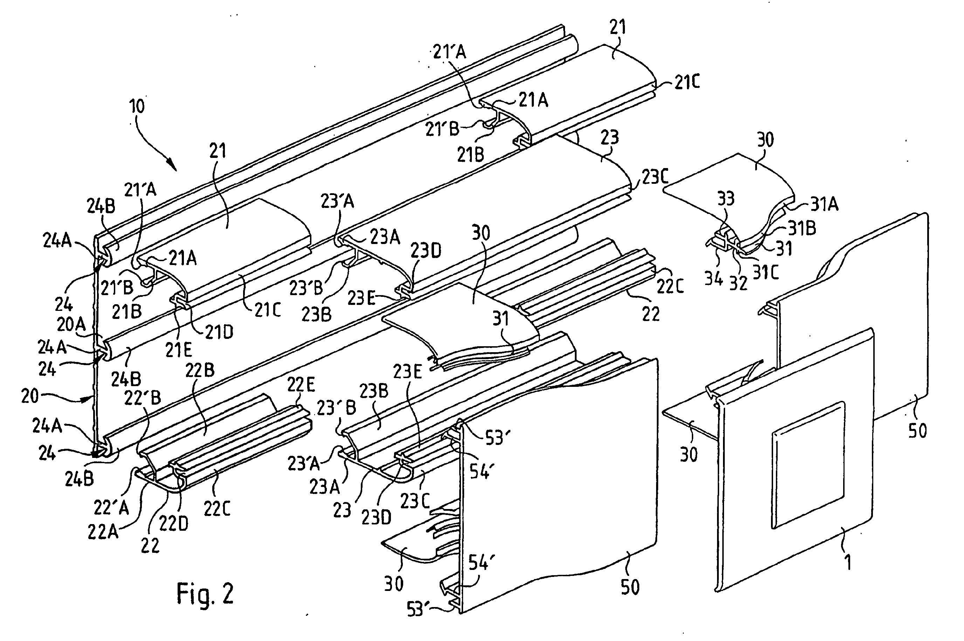

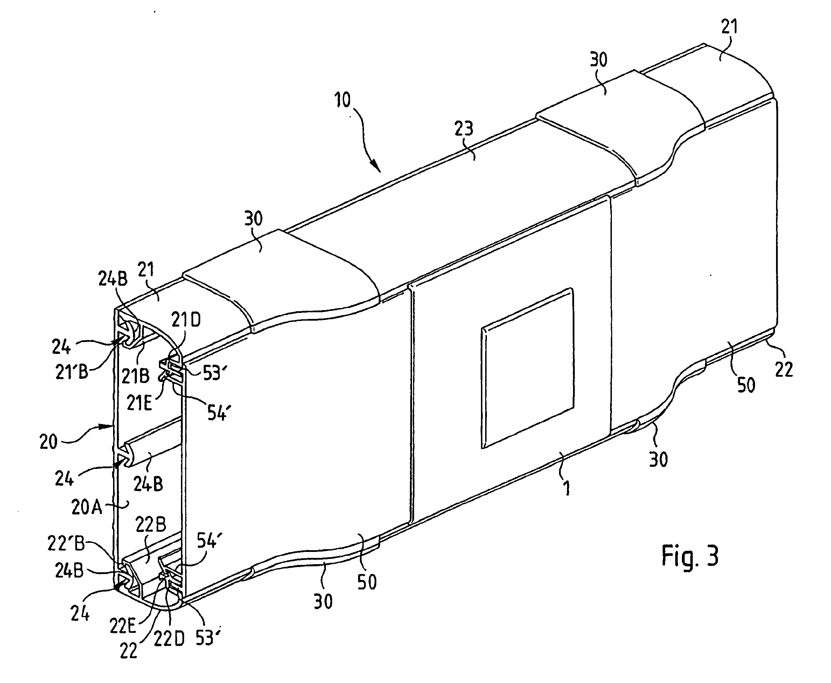

La goulotte 10 représentée sur les figures 2 et 3 comporte trois tronçons juxtaposés, à savoir deux tronçons d'extrémité de hauteurs identiques et, entre ces deux tronçons d'extrémité, un troisième tronçon de hauteur supérieure aux deux autres.

Chaque tronçon d'extrémité est formé par l'assemblage des parois longitudinales 21, 22 avec le fond 20A du socle 20, ces parois longitudinales 21, 22 présentant une première hauteur.

Le troisième tronçon est formé par l'assemblage des parois longitudinales 23 avec le fond 20A du socle 20, ces parois longitudinales 23 en regard l'une de l'autre présentant une deuxième hauteur supérieure à la première hauteur.

Comme le montre la figure 2, une des parois longitudinales 23 de longueur déterminée est positionnée entre deux parois longitudinales 21, et l'autre paroi longitudinale 23, de même longueur que la première, est positionnée entre deux parois longitudinales 22.

Avantageusement, et c'est l'objet de la présente invention, il est prévu, à chaque jonction de deux tronçons juxtaposés de hauteurs différentes, un accessoire pour goulotte qui comprend, selon le mode de réalisation représenté sur les figures 1 à 3, deux joues 30 rapportées sur lesdites ailes latérales parallèles du socle 20 de la goulotte, chaque joue 30 comportant des moyens de montage d'un tronçon de couvercle 50 qui s'étendent suivant une ligne présentant ici deux courbures adjacentes inversées 31A, 31B pour établir une continuité entre les moyens de montage 21D, 21E, 23D, 23E, 22D, 22E d'un tronçon de couvercle situés à deux hauteurs différentes de sorte que ledit accessoire autorise le montage, sur lesdites joues 30, d'un tronçon de couvercle 50 adapté à fermer le socle 20 de ladite goulotte 10 pour permettre la fermeture de la marche formée entre lesdits tronçons juxtaposés de hauteurs différentes et d'une partie de ces derniers par un seul tronçon de couvercle 50 sans interruption ni arête ou pliure au niveau de ladite marche.

Les moyens de montage d'un tronçon de couvercle 50 prévus sur chaque joue 30 sont ici sensiblement identiques aux moyens de montage d'un tronçon de couvercle 50 prévus sur les retours 21C, 22C, 23C des parois longitudinales 21, 22, 23 constituant les ailes latérales du socle 20 de la goulotte 10.

Ainsi, lesdits moyens de montage d'un tronçon de couvercle 50 prévus sur lesdites joues 30 comprennent, dans des retours, des moyens d'engagement du tronçon de couvercle 50 constitués par une rainure 31 qui assure une continuité entre les rainures 21D et 23D d'une part et les rainures 22D et 23D d'autre part prévues sur les retours 21C, 23C et 22C, 23C situés à des hauteurs différentes.

Pour ce faire, chaque rainure 31 de chaque joue 30 présente un trajet courbe en forme globalement de S avec deux courbures adjacentes inversées 31A, 31B, de sorte qu'une première partie de cette rainure 31 est située au niveau de la rainure 21D, 22D prévue dans le retour 21C, 22C de la paroi longitudinale 21, 22 correspondante, et une deuxième partie de la rainure 31 de la joue est située au niveau de la rainure 23D prévue dans le retour 23C de la paroi longitudinale 23 correspondante (voir figures 1 et 3).

En outre, les moyens de montage d'un tronçon de couvercle 50 prévus dans le retour de chaque joue 30 comprennent des moyens d'encliquetage dudit tronçon de couvercle 50 identiques aux moyens d'encliquetage prévus sur les retours 21C, 22C, 23C des parois longitudinales 21, 22, 23 constituant les ailes latérales du socle 20 de la goulotte 10.

Ces moyens d'encliquetage comprennent, pour chaque joue 30, un bourrelet d'encliquetage 31C qui assure une continuité de bourrelets d'encliquetage entre des bourrelets d'encliquetage 21 E, 22E, 23E prévus sur les retours 21C, 22C, 23C situés à des hauteurs différentes.

Le bourrelet d'encliquetage 31C de chaque joue 30 est situé sur le bord externe de la rainure 31. Il suit alors le même trajet courbe que celle-ci, trajet en forme de S avec deux courbures adjacentes inversées 31A, 31B.

Chaque joue 30 est constituée par un panneau d'une certaine hauteur qui, selon le mode de réalisation représenté sur les figures 1 à 3, couvre les hauteurs des parois longitudinales 21, 22, 23 constituant les ailes latérales du socle 20 de la goulotte 10 avec ses tronçons de hauteurs différentes, de sorte que chaque joue 30 permet de masquer la marche formée entre deux parois longitudinales 21, 23 et 22, 23 de hauteurs différentes ainsi que le joint de jonction entre ces deux parois longitudinales 21, 23 et 22, 23 de hauteurs différentes.

Avantageusement, dans le cas d'une gamme de goulottes de plusieurs hauteurs différentes, on peut prévoir que la hauteur de chaque joue 30 soit modifiable par découpage d'une partie du panneau de cette dernière suivant une ligne de découpe déterminée de façon à pouvoir adapter la hauteur de chaque joue à celles des ailes latérales des tronçons de goulotte de différentes hauteurs, de telle sorte que chaque joue masque entièrement le joint formé à la jonction de deux parois longitudinales de hauteurs différentes constituant une aile latérale correspondante de la goulotte.

En outre, avantageusement, chaque joue 30 comporte des moyens de montage sur les ailes latérales du socle 20 de la goulotte, et ici sur les parois longitudinales 21, 22, 23 qui constituent les ailes latérales dudit socle 20. Ces moyens de montage sont positionnés tête-bêche avec les moyens de montage 31, 31C d'un tronçon de couvercle et sont identiques aux moyens de montage d'un tronçon de couvercle 50 sur les retours 21C, 22C, 23C des parois longitudinales 21, 22, 23 du socle 20 de la goulotte 10.

Ces moyens de montage des joues 30 comprennent, d'une part, une languette d'engagement 33 apte à s'engager dans les rainures 21 D, 23D et 22D, 23D formées dans les retours 21C, 23C et 22C, 23C des parois longitudinales 21, 23 et 22, 23, et, d'autre part, parallèlement à cette languette d'engagement 33, une languette d'encliquetage 34 apte à s'encliqueter sur les bourrelets d'encliquetage 21E, 23E et 22E, 23E des parois longitudinales 21, 22, 23 formant les ailes latérales du socle 20 de la goulotte 10 composable.

A cet effet, la languette d'engagement 33 et la languette d'encliquetage 34 de chaque joue 30 suivent le même trajet courbe que la rainure 31 formée dans le retour de celle-ci.

Les languettes d'engagement 33 et d'encliquetage 34 de chaque joue 30 s'étendent dans une direction opposée à celle selon laquelle s'ouvre la rainure 31 de la joue 30 et sont rattachées à un rebord externe de ladite rainure 31 par un talon 32 qui prolonge ledit rebord externe.

Ainsi, comme le montre plus particulièrement la figure 3, avantageusement, l'accessoire décrit précédemment et conforme à l'invention permet de réaliser une goulotte 10 qui localement présente une plus grande hauteur correspondant à la hauteur des parois longitudinales 23 pour permettre notamment la mise en place d'un appareillage électrique dans cette goulotte sans empiéter sur son volume intérieur destiné au câblage.

A cet effet, sur la figure 3 qui représente la goulotte à l'état fermé, on a représenté schématiquement la position de l'appareillage électrique en question placé au niveau du tronçon de la goulotte de plus grande hauteur et fermé par une plaque enjoliveur 1.

Avantageusement également, le socle 20 de la goulotte 10 est fermé de manière continue par un tronçon de couvercle 50 qui ferme les tronçons de hauteurs différentes ainsi que la marche formée entre ceux-ci en suivant, à la jonction des deux tronçons, le trajet courbe avec deux courbures adjacentes inversées 31A, 31B des moyens de montage 31, 31C prévus sur chaque joue 30 sans marquer une pliure ou une arête.

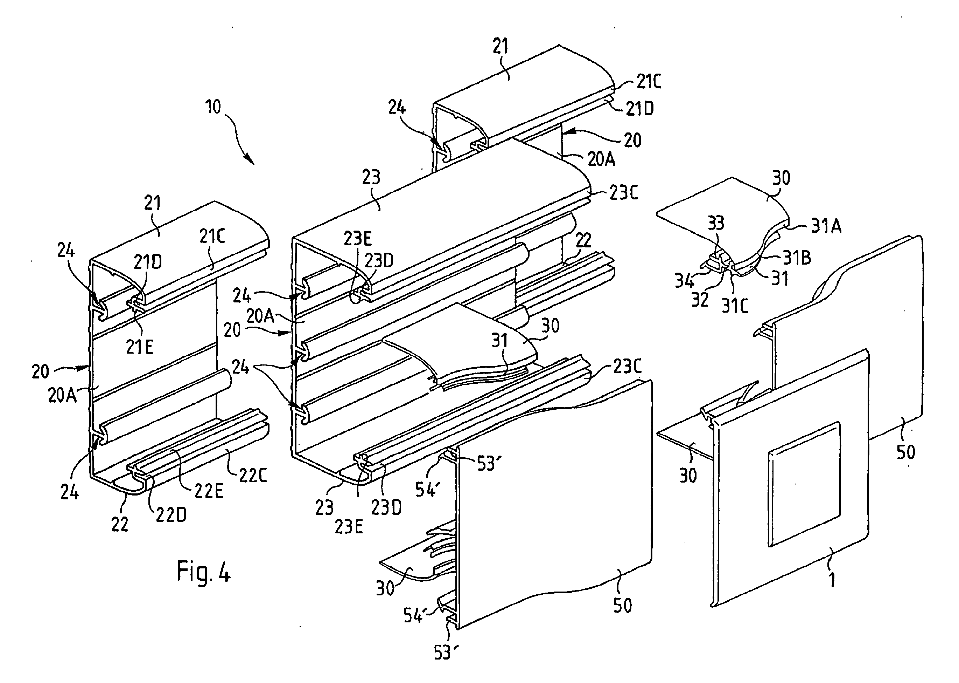

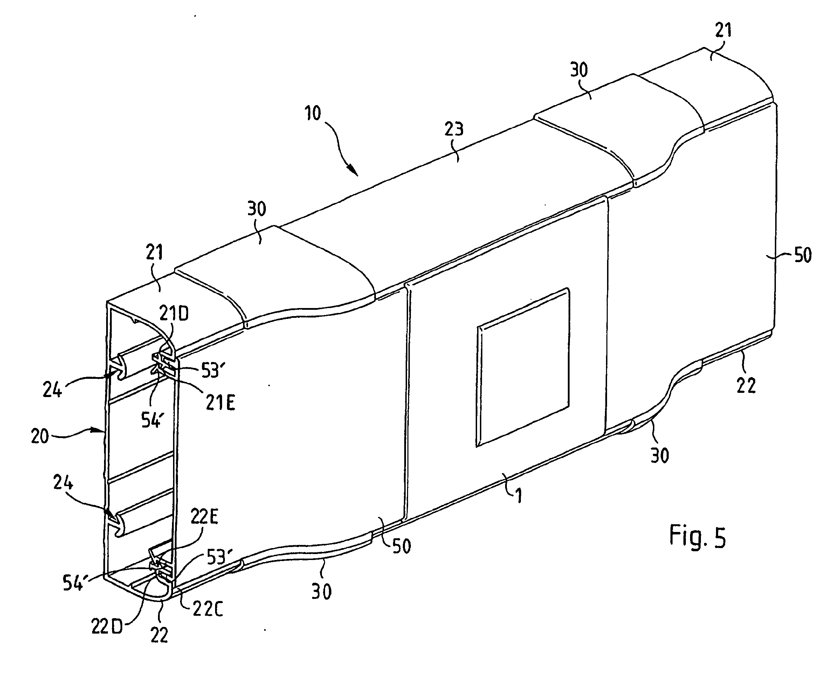

Sur les figures 4 et 5, on a représenté une variante de réalisation de la goulotte 10 représentée sur les figures 2 et 3 selon laquelle la goulotte 10 est constituée par une pluralité de tronçons de socle monobloc juxtaposés.

Elle comporte à cet effet deux socles 20 monobloc d'une première hauteur dont les ailes latérales 21, 22 forment une seule pièce avec le fond 20A du socle, et, entre les deux socles 20 monobloc présentant une première hauteur, un troisième socle 20 monobloc d'une deuxième hauteur supérieure à la première hauteur. Ce deuxième socle 20 monobloc comporte deux ailes latérales 23 dont la hauteur est supérieure aux ailes latérales 21, 22 des deux premiers socles 20.

Comme le montre plus particulièrement la figure 4, chaque socle 20 comporte sur son fond 20A des nervures longitudinales 24 identiques à celles portées par le fond 20A du socle 20 de la goulotte 10 représentée sur les figures 2 et 3. Des cloisons de séparation ou de fractionnement (non représentées) peuvent être rapportées sur ces nervures pour fractionner en plusieurs compartiments le volume intérieur du socle 20.

En outre, chaque aile latérale des socles 20 juxtaposés de la goulotte 10 représentée sur les figures 4 et 5 comporte des moyens de montage d'un tronçon de couvercle 50 identiques à ceux des parois longitudinales 21, 22, 23 de la goulotte 10 représentée sur les figures 2 et 3. De ce fait, ces moyens de montage ne seront pas décrits une nouvelle fois.

Les tronçons de couvercle 50 permettant de fermer les socles 20 des différents tronçons de la goulotte 10 sont identiques à ceux représentés sur les figures 1 à 3 et ne seront pas décrits une nouvelle fois.

De plus, la goulotte 10 comporte un double accessoire identique à celui représenté sur les figures 2 et 3 et ne sera pas décrit dans le détail une nouvelle fois.

Chaque accessoire établit ici une continuité entre chaque couple de socles 20 juxtaposés de hauteurs différentes, chaque joue 30 assurant une continuité de paroi entre les ailes latérales 21, 23 ; 22, 23 juxtaposées de hauteurs différentes ainsi qu'une continuité entre les moyens de montage 21D, 21E, 22D, 22E, 23D, 23E d'un tronçon de couvercle des retours 21C, 23C ; 22C, 23C desdites ailes latérales 21, 23 ; 22, 23 situés à des hauteurs différentes.

Une fois fermée, la goulotte 10 représentée sur la figure 5 présente un aspect externe identique à celui de la goulotte représentée sur la figure 3.

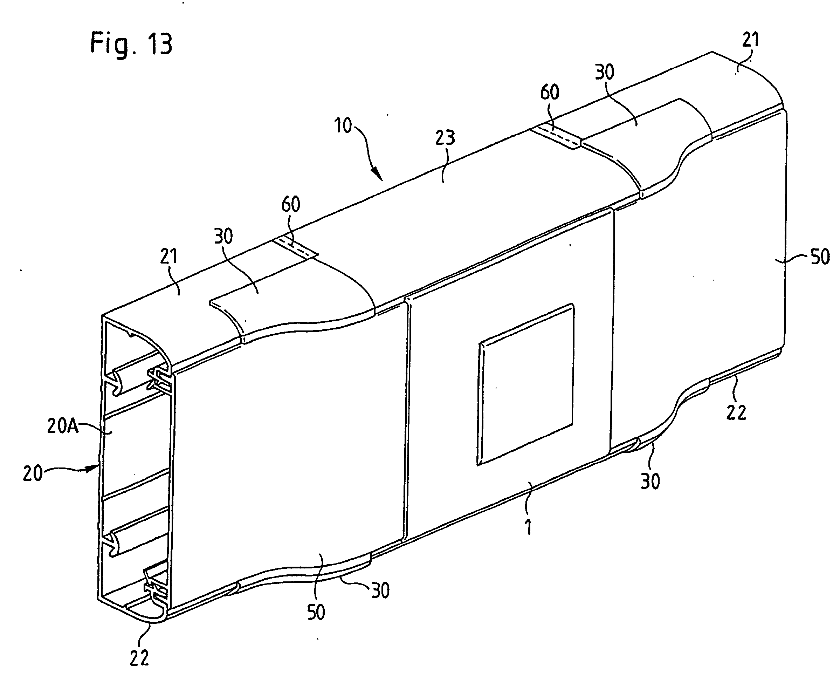

Sur la figure 13, on a représenté une variante de la goulotte 10, munie de son double accessoire, représentée sur la figure 5, selon laquelle les joues 30 de l'accessoire présentent une hauteur inférieure à la hauteur des ailes latérales 21, 22, 23 des socles 20 juxtaposés.

Dans ce cas, chaque joue 30 recouvre la marche formée entre les ailes latérales de hauteurs différentes et une partie du joint formé entre les ailes latérales 21, 23 des socles 20 de hauteurs différentes, l'autre partie de ce joint restant apparente et s'étendant sous chaque joue. Pour masquer la partie apparente de ce joint, il suffit alors de rapporter une bande de masquage 60 fixée sur les surfaces extérieures des ailes latérales 21, 22, 23 des socles 20 à l'aide d'un adhésif par exemple.

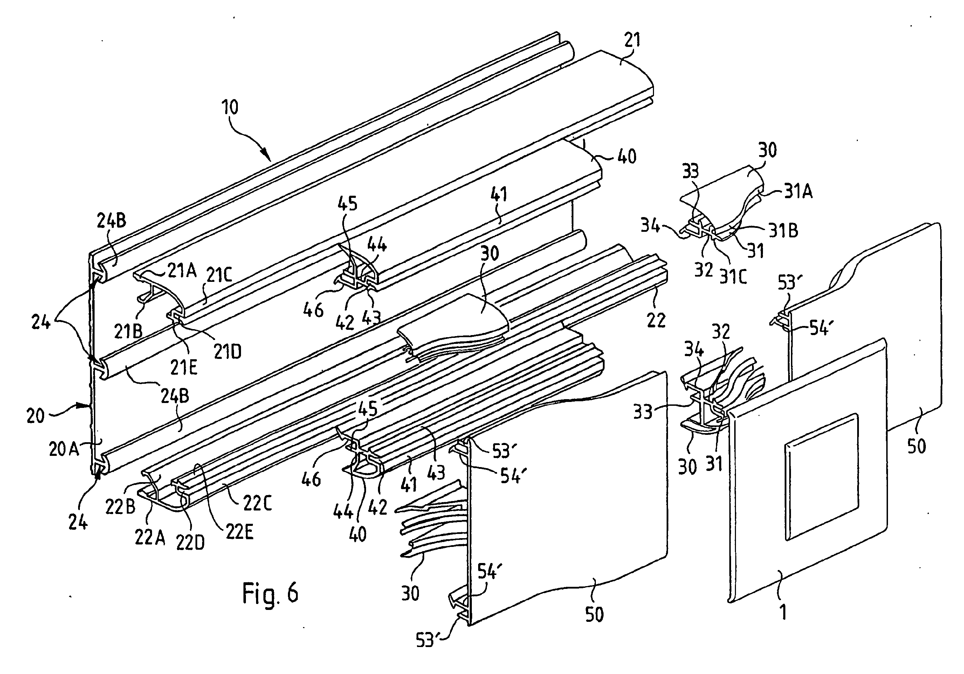

Sur les figures 6 à 8, on a représenté un autre mode de réalisation de la goulotte 10 qui comporte un socle 20 pourvu de deux ailes latérales 21, 22 dont les retours 21C, 22C sont dirigés l'un vers l'autre.

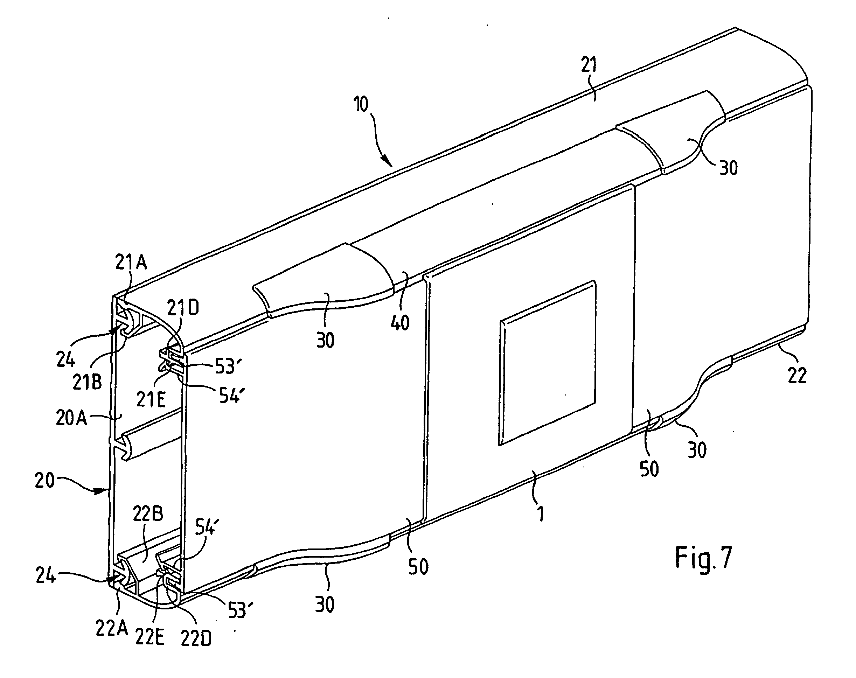

Le socle 20 représenté sur les figures 6 et 7 est un socle composable comprenant un fond 20A sur lequel sont montées des parois longitudinales 21, 22 constituant lesdites ailes latérales du socle.

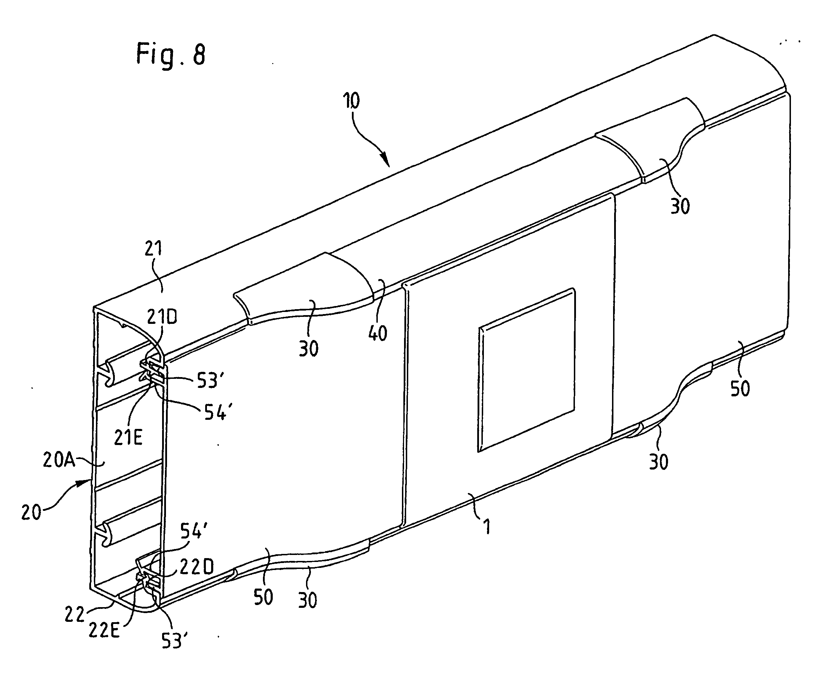

Le socle 20 représenté sur la figure 8 est un socle monobloc avec des ailes latérales 21, 22 formant une seule pièce avec le fond 20A.

Les parois longitudinales 21, 22 du socle 20 composable comportent des moyens de montage sur le fond 20A qui sont identiques aux moyens de montage des parois longitudinales 21, 22, 23 du socle 20 représenté sur la figure 1 et ne seront pas décrits encore une fois.

Mis à part la différence précitée, les socles 20 représentés sur les figures 6, 7 et 8 sont identiques.

Chaque aile latérale 21, 22 de chaque socle 20 comprend des moyens de montage formés dans leur retour qui sont identiques aux moyens de montage formés dans les retours des parois longitudinales 21, 22, 23 constituant les ailes latérales du socle 20 représenté sur les figures 1 et 2.

Par ailleurs, la goulotte 10 représentée sur les figures 6 à 8 comporte un accessoire comprenant deux rehausses 40 pourvues chacune de moyens de montage sur une aile latérale 21, 22 du socle 20 de la goulotte 10 pour surélever ladite aile latérale 21, 22 et former localement un tronçon de goulotte de hauteur supérieure à la hauteur du socle 20.

Bien entendu, les deux rehausses 40 sont montées sur les deux ailes latérales 21, 22 du socle 20 de façon à être positionnées en regard l'une de l'autre.

Les moyens de montage d'un tronçon de couvercle prévus sur le retour 41 de chaque rehausse 40 sont identiques aux moyens de montage d'un tronçon de couvercle prévus sur les retours 21C, 22C des ailes latérales 21, 22 du socle 20 de la goulotte 10.

A cet effet, ces moyens de montage comportent, dans le retour 41 de chaque rehausse 40, une rainure 42 rectiligne bordée par un rebord externe qui porte un bourrelet d'encliquetage 43 de sorte qu'il court le long de la rainure 42.

Lors du montage du tronçon de couvercle 50 sur le tronçon de plus grande hauteur du socle 20 de la goulotte 10, chaque languette d'engagement longitudinale 53' du tronçon de couvercle 50 s'engage dans une rainure 42 d'une rehausse 40 et chaque languette d'encliquetage longitudinale 54' du tronçon de couvercle 50 s'accroche sur un bourrelet d'encliquetage 43 correspondant de la rehausse 40.

L'accessoire représenté sur les figures 6 à 8 comporte également des joues 30 identiques à celles représentées sur les figures 1 à 5 et aptes à être montées sur lesdites ailes latérales 21, 22 et sur lesdites rehausses 40 de telle sorte que chaque joue 30 établit une continuité de paroi entre une aile latérale 21, 22 du socle 20 de la goulotte 10 et une rehausse 40 en masquant la marche formée entre l'aile latérale et la rehausse, ainsi qu'une continuité entre les moyens de montage d'un tronçon de couvercle 50 d'un retour d'une rehausse 40 et les moyens de montage d'un tronçon de couvercle 50 d'un retour d'une aile latérale 21, 22, situés à des hauteurs différentes (voir figure 8).

Les moyens de montage prévus sur chaque rehausse 40 pour son montage sur une aile latérale 21, 22 du socle 20 sont positionnés tête-bêche avec les moyens de montage 42, 43 de ladite rehausse 40. Ils comprennent une languette d'engagement 45 longitudinale destinée à s'engager dans la rainure 21D ou dans la rainure 22D de l'aile latérale 21 ou de l'aile latérale 22 du socle 20 de la goulotte, ainsi qu'une languette d'encliquetage 46 longitudinale s'étendant parallèlement à la languette d'engagement 45 longitudinale et apte à s'accrocher sur le bourrelet d'encliquetage 21 E ou sur le bourrelet d'encliquetage 22E porté par l'aile latérale 21 ou l'aile latérale 22 du socle 20 de la goulotte.

Les languettes d'engagement 45 et d'encliquetage 46 de chaque rehausse 40 sont reliées à la rainure 42 de celle-ci par un talon 44 qui s'étend à partir du rebord externe de la rainure 42 en direction desdites languettes d'engagement 45 et d'encliquetage 46.

Ainsi, chaque joue 30 montée sur une aile latérale 21, 22 du socle 20 établit une continuité de paroi entre chaque aile latérale et chaque rehausse ainsi qu'une continuité de rainures entre la rainure 21D, 22D de l'aile latérale 21, 22 correspondante et la rainure 42 de la rehausse 40 correspondante rapportée sur l'aile latérale.

Au surplus, chaque joue 30 établit une continuité de bourrelets d'encliquetage entre le bourrelet d'encliquetage 21E, 22E de l'aile latérale 21, 22 correspondante et le bourrelet d'encliquetage 43 de la rehausse 40 rapporté sur l'aile latérale.

Ainsi, selon ce mode de réalisation, en rapportant une rehausse 40 et les joues 30, on réalise à partir d'un socle 20 de hauteur constante une goulotte présentant un tronçon d'une première hauteur et un tronçon juxtaposé d'une deuxième hauteur supérieure, cette deuxième hauteur correspondant à la hauteur de l'aile latérale du socle augmentée de celle de la rehausse rapportée sur ladite aile latérale.

La continuité entre les moyens de montage d'un tronçon de couvercle est assurée par les joues 30 rapportées sur les ailes latérales 21, 22 et les rehausses 40 correspondantes du socle 20 de la goulotte 10 de telle sorte que les tronçons de couvercle 50 peuvent être montés sur les tronçons de hauteurs différentes de la goulotte en suivant le trajet courbe de la rainure 31 de chaque joue pour fermer chacun des tronçons juxtaposés ainsi que la marche formée à la jonction de ceux-ci sans former de pliure ou d'arête.

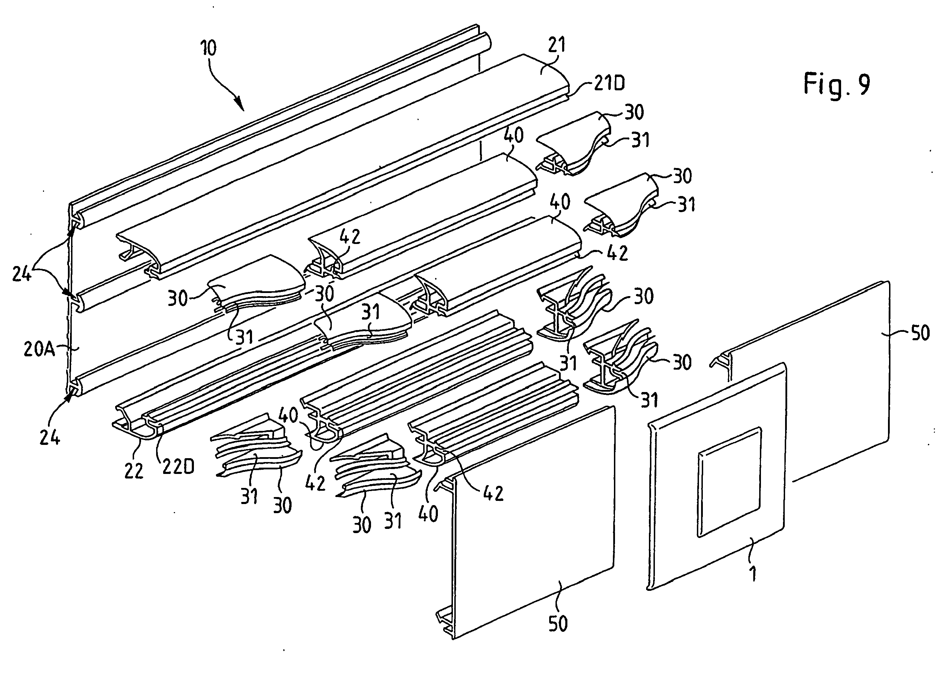

Sur la figure 9, on a représenté une goulotte 10 identique à celle représentée sur les figures 6 et 7 munie d'un accessoire du même type que celui représenté sur les figures 6 et 7 et comportant, pour chaque aile latérale 21, 22 de la goulotte, une pluralité de rehausses 40 de longueurs différentes, ici deux rehausses 40 de longueurs différentes par aile latérale 21, 22 du socle 20 de la goulotte 10.

Les rehausses 40 de longueurs différentes de chaque couple sont aptes à être montées l'une sur l'autre pour former une paroi de rehausse de forme globalement pyramidale avec la formation d'une marche à chaque jonction entre une première rehausse 40 et une deuxième rehausse 40 de plus courte longueur.

En fait, les rehausses 40 sont identiques excepté leurs longueurs différentes. Cela veut dire qu'elles présentent d'un côté les mêmes moyens de montage sur une aile latérale 21, 22 du socle 20 de la goulotte 10 et de l'autre côté les mêmes moyens de montage d'un tronçon de couvercle 50.

La superposition des rehausses de différentes longueurs permet localement de surélever encore plus le socle 20 de la goulotte en surélevant individuellement chaque aile latérale 21, 22 de ce socle pour accueillir notamment un appareillage électrique plus encombrant que celui monté dans la goulotte représentée sur les figures 6 à 8.

En outre, l'accessoire représenté sur la figure 9 comporte, avec la pluralité de rehausses 40 de longueurs différentes, une pluralité de joues 30 identiques à celles représentées sur les figures précédentes, chaque joue 30 étant apte à établir une continuité entre deux rehausses 40 successives de longueurs différentes ou entre la rehausse 40 inférieure montée sur l'aile latérale 21, 22 correspondante du socle 20 de la goulotte et ladite aile latérale 21, 22, en comblant la marche formée à la jonction des rehausses superposées ou à la jonction de la rehausse et de l'aile latérale correspondante.

Lorsqu'un couvercle 50 est monté sur le socle 20 de la goulotte 10 il suit un trajet courbe en double S suivant les lignes courbes successives des retours des différentes joues rapportées à la jonction entre les deux rehausses successives et à la jonction entre une rehausse et une aile latérale pour fermer, de manière continue, sans pliure ni formation d'arête, la cascade de marches formée entre les deux tronçons de goulotte juxtaposés de hauteurs différentes ainsi qu'une partie des tronçons eux-mêmes.

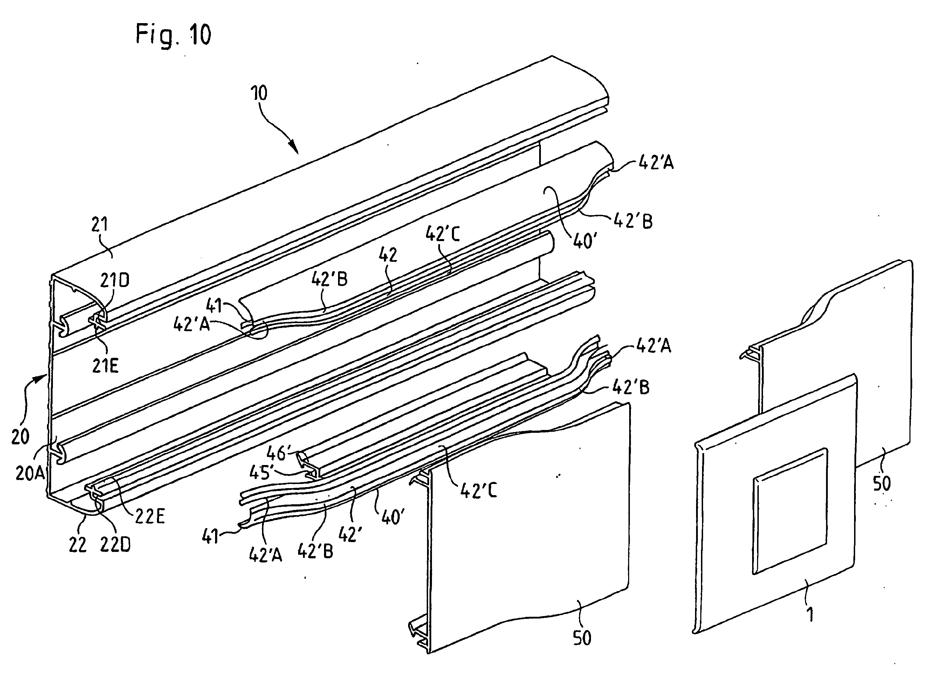

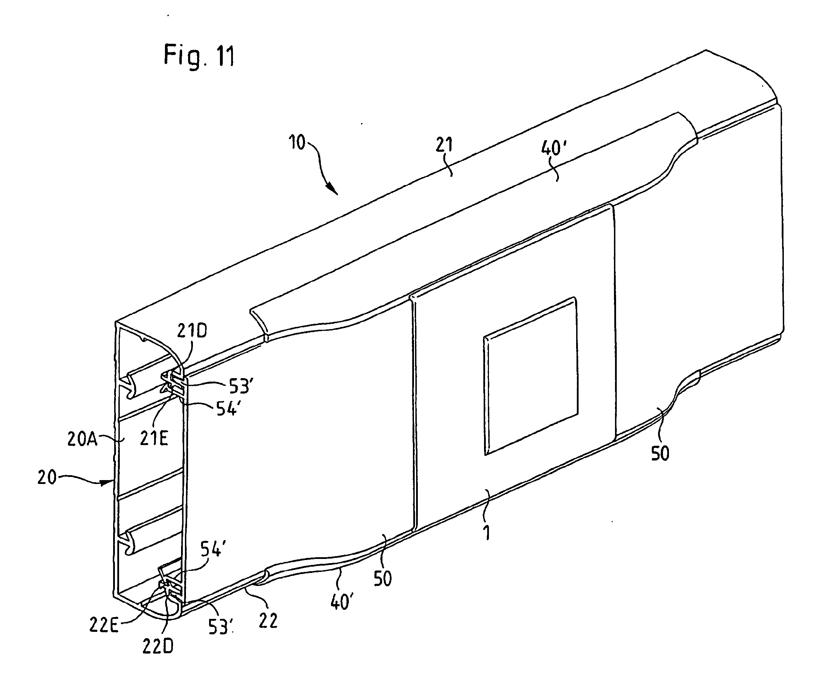

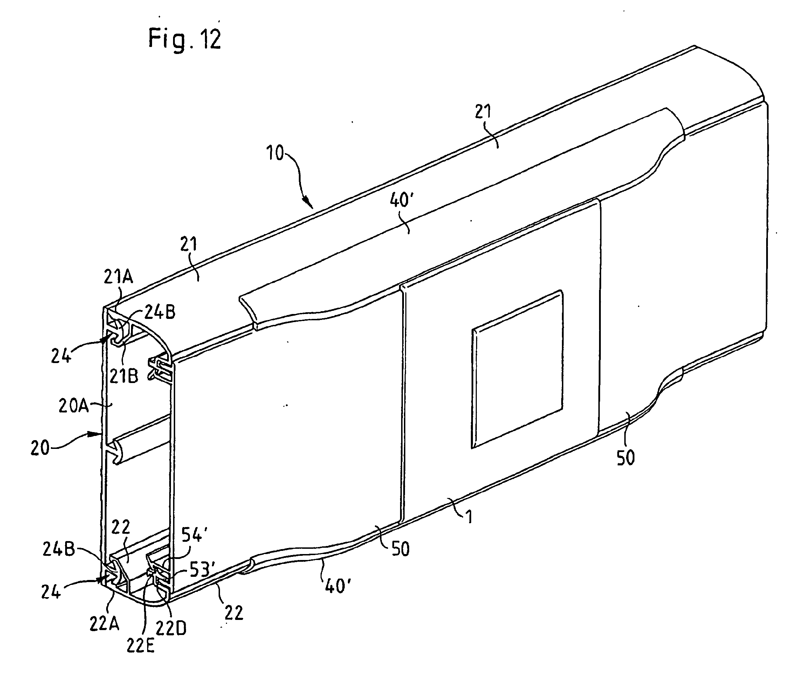

Sur les figures 10 et 11, on a représenté une goulotte 10 dont le socle 20 est identique à celui représenté sur la figure 8, et sur la figure 12 on a représenté une goulotte 10 composable dont le socle 20 est identique à celui représenté sur les figures 6 et 7.

La goulotte 10 représentée sur les figures 10 à 12 comporte un autre mode de réalisation de l'accessoire selon l'invention selon lequel il comporte une joue 40' à rapporter sur chacune des ailes latérales 21, 22 du socle 20 formant d'une seule pièce une rehausse du type de celle mise en oeuvre dans les modes de réalisation représentés sur les figures 6 à 8, et, à chaque extrémité, une joue du type de celle mise en oeuvre dans les modes de réalisation précédents.

Ainsi, chaque joue 40' comprend, d'une part, des moyens de montage d'un tronçon de couvercle 50 qui s'étendent sur une ligne présentant, à chaque extrémité, deux courbures adjacentes inversées 42'A, 42'B et; entre ses deux extrémités, un trajet rectiligne 42'C, et, d'autre part, des moyens de montage 45', 46' sur une aile latérale 21, 22 du socle 20 de la goulotte 10 pour surélever ladite aile latérale et former localement un tronçon de goulotte de hauteur supérieure à la hauteur du socle 20 de la goulotte 10, en assurant entre les deux hauteurs de tronçons de goulotte une continuité des moyens de montage d'un tronçon de couvercle.

Lesdits moyens de montage d'un tronçon de couvercle prévus sur chaque joue 40' comprennent une rainure 42', qui court dans un retour de la joue 40', et qui est bordée par un bourrelet d'encliquetage.

En outre, les moyens de montage de chaque joue 40' sur une aile latérale 21, 22 du socle 20 de la goulotte 10 sont identiques aux moyens de montage de la rehausse 40 représentée sur les 5 et 6 et comprennent une languette d'engagement 45' longitudinale et une languette d'encliquetage 46' longitudinale parallèles positionnées tête-bêche avec les moyens de montage 42' d'un tronçon de couvercle 50 de chaque joue 40'.

Selon une autre variante de l'accessoire selon l'invention non représentée sur les figures, il comporte une autre joue destinée à établir une continuité de paroi entre deux cloisons de fractionnement de hauteurs différentes rapportées sur les nervures longitudinales 24 portées par le fond 20A de chaque socle 20 de la goulotte 10, cette autre joue comportant un bandeau assurant une continuité de paroi entre des retours desdites cloisons de fractionnement non représentées dans lesquelles sont montés les tronçons de couvercle de fermeture des compartiments de chaque socle, ledit bandeau comprenant des moyens de montage desdits tronçons de couvercle s'étendant selon une ligne présentant au moins deux courbures adjacentes inversées pour établir une continuité entre des moyens de montage d'un tronçon de couvercle situés à deux hauteurs différentes et permettre la fermeture de la marche formée entre les tronçons de goulotte de hauteurs différentes et d'une partie de chaque couple de compartiments aboutés desdits tronçons de goulotte par un seul tronçon de couvercle sans interruption ni arête ou pliure dans ladite marche.

Enfin, l'accessoire de goulotte selon l'invention peut être utilisé pour la réalisation d'une goulotte de cheminement de fibres optiques.

En effet, pour la réalisation d'un angle de goulotte adapté à la réception de fibres optiques, il est possible d'augmenter localement, à l'approche de l'angle, la hauteur de la goulotte à l'aide de l'accessoire selon l'invention, et d'utiliser un accessoire d'angle classique prévu pour une dimension supérieure de goulotte. Puis, après l'angle de goulotte, à l'aide de l'accessoire selon l'invention, la goulotte peut repartir sur une hauteur plus faible identique à celle de la goulotte avant l'angle.

Ainsi, il n'est plus nécessaire de prévoir des accessoires spécifiques pour les angles de goulotte de cheminement de fibres optiques.

Sur les figures 15 et 16, on a représenté une joue 30' d'une variante de réalisation de l'accessoire conforme à l'invention.

Cette joue 30' comporte, comme la joue 30, des moyens de montage sur les ailes latérales du socle de la goulotte. Ces moyens de montage comprennent, d'une part, une languette d'engagement 33' apte à s'engager dans les rainures formées dans les retours des parois longitudinales qui constituent les ailes latérales dudit socle, et, d'autre part, parallèlement à cette languette d'engagement 33', une languette d'encliquetage 34' apte à s'encliqueter sur des bourrelets d'encliquetage desdites parois longitudinales.

En outre, chaque joue 30' de cette variante de réalisation de l'accessoire selon l'invention comporte des moyens de montage d'un tronçon de couvercle qui s'étendent suivant une ligne présentant ici deux courbures inversées 31'A, 31'B séparées l'une de l'autre d'une portion rectiligne 31'D pour établir une continuité entre des moyens de montage d'un tronçon de couvercle situés à deux hauteurs différentes de sorte que ledit accessoire autorise le montage, sur lesdites joues 30', d'un tronçon de couvercle adapté à fermer le socle de la goulotte pour permettre la fermeture de la marche formée entre lesdits tronçons juxtaposés de hauteurs différentes et d'une partie de ces derniers par un seul tronçon de couvercle sans interruption ni arête ou pliure au niveau de ladite marche.

La portion rectiligne 31'D que suivent lesdits moyens de montage s'étend sur une distance D située entre les points A et B marqués sur la figure 16.

Lesdits moyens de montage du tronçon de couvercle sont sensiblement identiques à ceux prévus pour les joues 30 décrites précédemment, à savoir qu'ils comprennent des moyens d'engagement constitués par une rainure 31' qui assure une continuité entre les rainures d'une part et les rainures d'autre part prévues sur les retours desdites ailes latérales situés à des hauteurs différentes.

Selon ce mode de réalisation, chaque rainure 31' présente un trajet suivant un S étiré de sorte qu'une première partie 31'A de cette rainure 31' est située au niveau de la rainure prévue dans le retour de la paroi longitudinale correspondante, et une deuxième partie 31'B de la rainure 31' de la joue 30' est située au niveau de la rainure prévue dans le retour de la paroi longitudinale correspondante.

## Revendications

1. Goulotte (10) présentant au moins deux tronçons juxtaposés de hauteurs différentes, ladite goulotte comprenant au moins un socle (20) pourvu de deux ailes latérales dont les retours, dirigés l'un vers l'autre, comportent des moyens de montage d'un tronçon de couvercle, au moins deux joues (30 ; 30') rapportées sur lesdites ailes latérales parallèles, chaque joue comportant des moyens de montage (31, 31C ; 31') d'un tronçon de couvercle (50) qui s'étendent suivant une ligne présentant au moins deux courbures inversées (31A, 31 B ; 31'A. 31'B)) pour établir une continuité entre des moyens de montage (21 D, 21 E, 23D, 23E) d'un tronçon de couvercle (50) situés à deux hauteurs différentes, et un tronçon de couvercle (50) monté sur lesdites joues, de sorte que la marche formée entre lesdits tronçons juxtaposés de hauteurs différentes et une partie de ces derniers sont fermés par un seul tronçon de couvercle (50) sans interruption ni arête ou pliure au niveau de ladite marche.

2. Goulotte selon la revendication 1, **caractérisée en ce que** lesdites courbures inversées (31A, 31 B) sont adjacentes.

3. Goulotte selon la revendication 1, **caractérisée en ce que** lesdites courbures inversées (31'A, 31'B) sont séparées l'une de l'autre par une portion rectiligne (31'D).

4. Goulotte selon l'une des revendications 1 à 3, présentant une continuité entre deux tronçons de goulotte de hauteurs différentes comportant chacun un socle (20) pourvu de deux ailes latérales, **caractérisée en ce que** chaque joue (30) comprend des moyens de montage (33, 34) et est rapportée sur lesdits socles (20) à la jonction de deux ailes latérales juxtaposées de hauteurs différentes, chaque joue (30) assurant une continuité de paroi entre lesdites ailes latérales (21, 23 ; 22, 23), et établissant une continuité entre les moyens de montage d'un tronçon de couvercle des retours desdites ailes latérales situés à des hauteurs différentes.

5. Goulotte selon l'une des revendications 1 à 3, **caractérisée en ce qu'**elle comprend au moins deux rehausses (40) comportant chacune un retour (41) comprenant des moyens de montage (42, 43) d'un tronçon de couvercle (50) et des moyens de montage (45, 46) sur une aile latérale (21, 22) du socle (20) de la goulotte (10), lesdites rehausses surélevant ladite aile latérale (21, 22) et formant localement un tronçon de goulotte de hauteur supérieure à la hauteur dudit socle, lesdites joues (30) comprenant des moyens de montage (33, 34) sur lesdites ailes latérales (21, 22) et sur lesdites rehausses (40) de telle sorte que chaque joue (30) établit une continuité de paroi entre une aile latérale (21, 22) du socle (20) de la goulotte (10) et une rehausse (40) ainsi qu'une continuité entre les moyens de montage (42, 43) d'un tronçon de couvercle d'un retour (41) d'une rehausse (40) et les moyens de montage (21 D, 21 E, 22D, 22E) d'un tronçon de couvercle d'un retour (21C, 22C) d'une aile latérale (21, 22), situés à des hauteurs différentes.

6. Goulotte selon la revendication 5, **caractérisée en ce qu'**elle comprend, d'une part, une pluralité de rehausses (40) de longueurs différentes montées les unes sur les autres pour former une paroi de rehausse de forme globalement pyramidale avec la formation d'une marche à chaque jonction entre une première rehausse (40) et une deuxième rehausse (40) de plus courte longueur, cette paroi de rehausse comprenant des moyens de montage (42, 43) d'un tronçon de couvercle et des moyens de montage (45, 46) sur une aile latérale (21, 22) du socle (20) de la goulotte (10) surélevant ladite aile latérale (21, 22), et, d'autre part, une pluralité de joues (30), chaque joue (30) établissant une continuité entre deux rehausses (40) successives de longueurs différentes.

7. Goulotte selon l'une des revendications 1 à 3, **caractérisée en ce que** chaque joue (40') comprend, d'une part, des moyens de montage (42') d'un tronçon de couvercle (50) qui s'étendent suivant une ligne présentant, à chaque extrémité, deux courbures inversées (42'A, 42'B) et, entre ses deux extrémités, un trajet rectiligne (42'C), et, d'autre part, des moyens de montage (45', 46') sur une aile latérale (21, 22) du socle (20) de la goulotte (10) surélevant ladite aile latérale (21, 22) et formant localement un tronçon de goulotte de hauteur supérieure à la hauteur dudit socle de la goulotte, en assurant entre les deux hauteurs de tronçons de goulotte une continuité de moyens de montage d'un tronçon de couvercle.

8. Goulotte selon l'une des revendications 1 à 7, **caractérisée en ce qu'**elle comporte une autre joue établissant une continuité de paroi entre deux cloisons de fractionnement de hauteurs différentes rapportées sur le fond de chaque socle de la goulotte, cette autre joue comportant un bandeau assurant une continuité de paroi entre des retours desdites cloisons de fractionnement dans lesquelles sont montés les tronçons de couvercle de fermeture des compartiments de chaque socle, ledit bandeau comprenant des moyens de montage desdits tronçons de couvercle s'étendant selon une ligne présentant au moins deux courbures inversées établissant une continuité entre des moyens de montage d'un tronçon de couvercle situés à deux hauteurs différentes et permettre la fermeture de la marche formée entre les tronçons de goulotte de hauteurs différentes et d'une partie de chaque couple de compartiments aboutés desdits tronçons de goulotte par un seul tronçon de couvercle sans interruption ni arête ou pliure dans ladite marche.

9. Goulotte selon l'une des revendications 1 à 8, **caractérisée en ce que** lesdits moyens de montage (31, 31 C) d'un tronçon de couvercle (50) prévus sur chaque joue (30) sont sensiblement identiques aux moyens de montage (21 D, 21 E, 22D, 22E) d'un tronçon de couvercle prévus sur lesdits retours desdites ailes latérales (21, 22) ou des cloisons de fractionnement de chaque socle (20) de la goulotte (10).

10. Goulotte selon l'une des revendications 4 à 9, **caractérisée en ce que** lesdits moyens de montage (42, 43) d'un tronçon de couvercle (50) prévus sur chaque rehausse (40) sont sensiblement identiques aux moyens de montage (21 D, 21 E, 22D, 22E) d'un tronçon de couvercle (50) prévus sur les retours (21C, 22C) des ailes latérales (21, 22) du socle de la goulotte.

11. Goulotte selon l'une des revendications 1 à 10, **caractérisée en ce que** lesdits moyens de montage d'un tronçon de couvercle prévus sur lesdites joues (30) comprennent des moyens d'engagement (31) dudit tronçon de couvercle.

12. Goulotte selon la revendication 11, **caractérisée en ce que** lesdits moyens d'engagement comprennent pour chaque joue (30) une rainure (31) qui assure une continuité de rainures (21D, 23D) prévues sur des retours situés à des hauteurs différentes.

13. Goulotte selon l'une des revendications 1 à 12, **caractérisée en ce que** lesdits moyens de montage d'un tronçon de couvercle prévus sur chaque joue (30) comprennent des moyens d'encliquetage (31C) dudit tronçon de couvercle.

14. Goulotte selon la revendication 13, **caractérisée en ce que** lesdits moyens d'encliquetage comprennent, pour chaque joue (30), un bourrelet d'encliquetage (31 C) qui assure une continuité de bourrelets d'encliquetage entre des bourrelets d'encliquetage (21 E, 23E) prévus sur des retours situés à des hauteurs différentes.

15. Goulotte selon l'une des revendications 1 à 14, **caractérisée en ce que** les moyens de montage des joues (30) sur les ailes latérales (21, 22) du socle (20) de la goulotte (10) sont identiques aux moyens de montage (21 D, 21E, 22D, 22E) d'un tronçon de couvercle (50) sur les retours (21C, 22C) des ailes latérales (21, 22) du socle (20) de ladite goulotte (10).

16. Goulotte selon l'une des revendications 4 à 15, **caractérisée en ce que** les moyens de montage (45, 46) de chaque rehausse (40) sur une aile latérale (21, 22) du socle (20) de la goulotte (10) sont sensiblement identiques aux moyens de montage (21 D, 21 E, 22D, 22E) d'un tronçon de couvercle (50) sur les retours (21C, 22C) d'une aile latérale (21, 22) du socle (20) de la goulotte (10).

17. Goulotte selon l'une des revendications 1 à 16, **caractérisée en ce que** chaque joue présente une hauteur modifiable par découpage d'une partie de cette dernière suivant une ligne de découpe déterminée de façon à pouvoir adapter la hauteur de chaque joue à celles des ailes latérales des tronçons de goulotte de différentes hauteurs.

## Patentansprüche

1. Kabelkanal (10), der wenigstens zwei aneinander gelegte Abschnitte mit unterschiedlichen Höhen aufweist, wobei der Kabelkanal wenigstens einen Sockel (20), der mit zwei Seitenflügeln versehen ist, deren zueinander gerichtete Umschläge Mittel zur Montage eines Deckelabschnitts umfassen, wenigstens zwei Wangen (30; 30'), die an die parallelen Seitenflügel angesetzt sind, wobei jede Wange Mittel zur Montage (31, 31C; 31') eines Deckelabschnitts (50) umfasst, die sich entlang einer Linie erstrecken, welche wenigstens zwei umgekehrte Krümmungen (31A, 31 B; 31'A, 31'B) aufweist, um zwischen in zwei unterschiedlichen Höhen gelegenen Mitteln zur Montage (21D, 21E, 23D, 23E) eines Deckelabschnitts (50) eine Kontinuität herzustellen, sowie einen Deckelabschnitt (50) umfasst, der an den Wangen angebracht ist, so dass die Stufe, die zwischen den aneinander liegenden Abschnitten mit unterschiedlichen Höhen gebildet ist, und ein Teil dieser letzteren durch einen einzigen Deckelabschnitt (50) ohne Unterbrechung noch Kante oder Knick im Bereich der Stufe verschlossen sind.

2. Kabelkanal nach Anspruch 1,
**dadurch gekennzeichnet, dass**
die umgekehrten Krümmungen (31A, 31 B) aneinandergrenzend sind.

3. Kabelkanal nach Anspruch 1,
**dadurch gekennzeichnet, dass**
die umgekehrten Krümmungen (31'A, 31'B) durch einen geradlinigen Abschnitt (31'D) voneinander getrennt sind.

4. Kabelkanal nach einem der Ansprüche 1 bis 3, aufweisend eine Kontinuität zwischen zwei Kabelkanalabschnitten mit unterschiedlichen Höhen, die jeweils einen mit zwei Seitenflügeln versehenen Sockel (20) umfassen,
**dadurch gekennzeichnet, dass**
jede Wange (30) Montagemittel (33, 34) umfasst und an der Verbindungsstelle von zwei aneinander liegenden Seitenflügeln mit unterschiedlichen Höhen an die Sockel (20) angesetzt ist, wobei jede Wange (30) eine Wandkontinuität zwischen den Seitenflügeln (21, 23; 22, 23) sicherstellt und zwischen den Mitteln zur Montage eines Deckelabschnitts der Umschläge der Seitenflügel, die in unterschiedlichen Höhen gelegen sind, eine Kontinuität herstellt.

5. Kabelkanal nach einem der Ansprüche 1 bis 3,
**dadurch gekennzeichnet, dass**
er wenigstens zwei Aufsätze (40) umfasst, die jeweils einen Umschlag (41) aufweisen, der Mittel zur Montage (42, 43) eines Deckelabschnitts (50) und Mittel zur Montage (45, 46) an einem Seitenflügel (21, 22) des Sockels (20) des Kabelkanals (10) umfasst, wobei die Aufsätze den Seitenflügel (21, 22) erhöhen und lokal einen Kabelkanalabschnitt bilden, dessen Höhe größer als die Höhe des Sockels ist, wobei die Wangen (30) Mittel zur Montage (33, 34) an den Seitenflügeln (21, 22) und an den Aufsätzen (40) umfassen, derart, dass jede Wange (30) eine Wandkontinuität zwischen einem Seitenflügel (21, 22) des Sockels (20) des Kabelkanals (10) und einem Aufsatz (40) sowie eine Kontinuität zwischen den Mitteln zur Montage (42, 43) eines Deckelabschnitts eines Umschlags (41) eines Aufsatzes (40) und den Mitteln zur Montage (21 D, 21 E, 22D, 22E) eines Deckelabschnitts eines Umschlags (21C, 22C) eines Seitenflügels (21, 22), die in unterschiedlichen Höhen gelegen sind, herstellt.

6. Kabelkanal nach Anspruch 5,
**dadurch gekennzeichnet, dass**
er einerseits eine Vielzahl von Aufsätzen (40) mit unterschiedlichen Längen umfasst, die aufeinander angebracht sind, um eine insgesamt pyramidenförmige Aufsatzwand mit Bildung einer Stufe an jeder Verbindungsstelle zwischen einem ersten Aufsatz (40) und einem zweiten Aufsatz (40) kleinerer Länge zu bilden, wobei diese Aufsatzwand Mittel zur Montage (42, 43) eines Deckelabschnitts und Mittel zur Montage (45, 46) an einem Seitenflügel (21, 22) des Sockels (20) des Kabelkanals (10), welche den Seitenflügel (21, 22) erhöhen, umfasst, sowie andererseits eine Vielzahl von Wangen (30), wobei jede Wange (30) zwischen zwei aufeinanderfolgenden Aufsätzen (40) unterschiedlicher Längen eine Kontinuität herstellt.

7. Kabelkanal nach einem der Ansprüche 1 bis 3,
**dadurch gekennzeichnet, dass**
jede Wange (40') einerseits Mittel zur Montage (42') eines Deckelabschnitts (50), die sich entlang einer Linie erstrecken, welche an jedem Ende zwei umgekehrte Krümmungen (42'A, 42'B) und zwischen ihren beiden Enden eine geradlinige Strecke (42'C) aufweist, sowie andererseits Mittel zur Montage (45', 46') an einem Seitenflügel (21, 22) des Sockels (20) des Kabelkanals (10) umfasst, welche den Seitenflügel (21, 22) erhöhen und lokal einen Kabelkanalabschnitt, dessen Höhe größer als die Höhe des Sockels des Kabelkanals ist, bilden, wobei zwischen den beiden Kabelkanalabschnittshöhen eine Kontinuität von Mitteln zur Montage eines Deckelabschnitts sichergestellt wird.

8. Kabelkanal nach einem der Ansprüche 1 bis 7,
**dadurch gekennzeichnet, dass**
er eine weitere Wange umfasst, die zwischen zwei Einteilungswänden mit unterschiedlichen Höhen, die an den Boden eines jeden Sockels des Kabelkanals angesetzt sind, eine Wandkontinuität herstellt, wobei diese weitere Wange eine Blende umfasst, die eine Wandkontinuität zwischen Umschlägen der Einteilungswände sicherstellt, in denen die Deckelabschnitte zum Verschließen der Abteile eines jeden Sockels angebracht sind, wobei die Blende Mittel zur Montage der Deckelabschnitte, die sich entlang einer Linie mit wenigstens zwei umgekehrten Krümmungen erstrecken, umfasst, die zwischen Mitteln zur Montage eines Deckelabschnitts, welche in zwei unterschiedlichen Höhen gelegen sind, eine Kontinuität herstellen und das Verschließen der zwischen den Kabelkanalabschnitten unterschiedlicher Höhen gebildeten Stufe und eines Teils jedes Paars von aneinander gefügten Abteilen der Kabelkanalabschnitte durch einen einzigen Deckelabschnitt ohne Unterbrechung noch Kante oder Knick in der Stufe ermöglichen.

9. Kabelkanal nach einem der Ansprüche 1 bis 8,
**dadurch gekennzeichnet, dass**
die Mittel zur Montage (31, 31 C) eines Deckelabschnitts (50), die an jeder Wange (30) vorgesehen sind, mit den Mitteln zur Montage (21 D, 21 E, 22D, 22E) eines Deckelabschnitts, die an den Umschlägen der Seitenflügel (21, 22) oder der Einteilungswände eines jeden Sockels (20) des Kabelkanals (10) vorgesehen sind, im Wesentlichen identisch sind.

10. Kabelkanal nach einem der Ansprüche 4 bis 9,
**dadurch gekennzeichnet, dass**
die Mittel zur Montage (42, 43) eines Deckelabschnitts (50), die an jedem Aufsatz (40) vorgesehen sind, mit den Mitteln zur Montage (21 D, 21 E, 22D, 22E) eines Deckelabschnitts (50), die an den Umschlägen (21C, 22C) der Seitenflügel (21, 22) des Sockels des Kabelkanals vorgesehen sind, im Wesentlichen identisch sind.

11. Kabelkanal nach einem der Ansprüche 1 bis 10,
**dadurch gekennzeichnet, dass**
die Mittel zur Montage eines Deckelabschnitts, die an den Wangen (30) vorgesehen sind, Mittel für das Eingreifen (31) des Deckelabschnitts umfassen.

12. Kabelkanal nach Anspruch 11,
**dadurch gekennzeichnet, dass**
die Eingreifmittel für jede Wange (30) eine Nut (31) umfassen, die eine Kontinuität von Nuten (21 D, 23D), welche an in unterschiedlichen Höhen gelegenen Umschlägen vorgesehen sind, sicherstellt.

13. Kabelkanal nach einem der Ansprüche 1 bis 12,
**dadurch gekennzeichnet, dass**
die Mittel zur Montage eines Deckelabschnitts, die an jeder Wange (30) vorgesehen sind, Mittel für das Eingreifen (31 C) des Deckelabschnitts umfassen.

14. Kabelkanal nach Anspruch 13,
**dadurch gekennzeichnet, dass**
die Eingreifmittel für jede Wange (30) einen Eingreifwulst (31 C) umfassen, der eine Kontinuität von Eingreifwülsten zwischen Eingreifwülsten (21 E, 23E), die an in unterschiedlichen Höhen gelegenen Umschlägen vorgesehen sind, sicherstellt.

15. Kabelkanal nach einem der Ansprüche 1 bis 14,
**dadurch gekennzeichnet, dass**
die Mittel zur Montage der Wangen (30) an den Seitenflügeln (21, 22) des Sockels (20) des Kabelkanals (10) mit den Mitteln zur Montage (21 D, 21 E, 22D, 22E) eines Deckelabschnitts (50) an den Umschlägen (21C, 22C) der Seitenflügel (21, 22) des Sockels (20) des Kabelkanals (10) identisch sind.

16. Kabelkanal nach einem der Ansprüche 4 bis 15,
**dadurch gekennzeichnet, dass**
die Mittel zur Montage (45, 46) eines jeden Aufsatzes (40) an einem Seitenflügel (21, 22) des Sockels (20) des Kabelkanals (10) mit den Mitteln zur Montage (21D, 21E, 22D, 22E) eines Deckelabschnitts (50) an den Umschlägen (21C, 22C) eines Seitenflügels (21, 22) des Sockels (20) des Kabelkanals (10) im Wesentlichen identisch sind.

17. Kabelkanal nach einem der Ansprüche 1 bis 16,
**dadurch gekennzeichnet, dass**
jede Wange eine Höhe aufweist, die durch Abschneiden eines Teils dieser letzteren entlang einer bestimmten Schnittlinie veränderbar ist, so dass die Höhe einer jeden Wange an diejenigen der Seitenflügel der Kabelkanalabschnitte unterschiedlicher Höhen angepasst werden kann.

## Claims

1. A trunking accessory (10) comprising at least two juxtaposed lengths with different heights, said trunking including at least a base section (20) provided with two lateral flanges with rims directed toward each other and including members for mounting a length of cover section, at least two cheeks (30 ; 30') attached to said parallel lateral flanges, each cheek including members for mounting (31, 31c ; 31') a length of cover section (50) that extend along a line having at least two opposite curves (31A, 31B ; 31'A, 31'B) to establish continuity between members for mounting (21D, 21E ; 23D, 23E) a length of cover section (50) situated at two different heights and a cover section (50) mounted on said cheeks, so that the step formed between said juxtaposed lengths with different heights and a portion thereof are closed by a single length of cover (50) section with no interruption or visible edge or crease at the location of said step.

2. The trunking claimed in claim 1, **characterized in that** said opposite curves (31A, 31B) are adjacent.

3. The trunking claimed in claim 1, **characterized in that** said opposite curves (31'A, 31'B) are separated from each other by a rectilinear portion (31'D).

4. The trunking claimed in one of claims 1 to 3, providing continuity between two lengths of trunking having different heights, each including a base section (20) with two lateral flanges, **characterized in that** each cheek (30) includes mounting members (33, 34) and is attached to said base sections (20) at the junction of two juxtaposed lateral flanges of different heights, each cheek (30) ensuring a continuous wall between said lateral flanges (21, 23 ; 22, 23) establishing continuity between the members for mounting a length of cover section on the rims of said lateral flanges situated at different heights.

5. The trunking claimed in one of claims 1 to 3, **characterized in that** it includes at least two height extenders (40) each including a rim (41) including members for mounting (42, 43) a length of cover section (50) and members (45, 46) for mounting it on a lateral flange (21, 22) of said base section (20) of said trunking (10) to increase the height of said lateral flange (21, 22) and locally form a length of trunking of greater height than said base section, said cheeks (30) including members for mounting (33, 34) them on said lateral flanges (21, 22) and on said height extenders (40) so that each cheek (30) establishes a continuous wall between a lateral flange (21, 22) of said base section (20) of said trunking (10) and a height extender (40) and continuity between the members for mounting (42, 43) a length of cover section on a rim (41) on a height extender (40) and the members for mounting (21D, 21E ; 22D, 22E) a length of cover section on a rim (21C, 22C) on a lateral flange (21, 22) situated at different heights.

6. The trunking claimed in claim 5, **characterized in that** it comprises on the one hand a plurality of height extenders (40) with different lengths adapted to be stacked to form a height extender wall of globally pyramidal shape with a step formed at each junction between a first height extender (40) and a second height extender (40) of shorter length, said height extender wall comprising members for mounting (42, 43) a length of cover section and members for mounting (45, 46) it on a lateral flange (21, 22) of said base section (20) of said trunking (10) increasing the height of said lateral flange (21, 22) and on the other hand a plurality of cheeks (30) each adapted to establish continuity between two successive height extenders (40) with different lengths.

7. The trunking claimed in one of claims 1 to 3, **characterized in that** each cheek (40') comprises on the one hand members for mounting (42') a length of cover section (50) that extend along a line having two opposite curves (42'A, 42'B) at each end and a rectilinear path (42'C) between its two ends and on the other hand members for mounting (45', 46') it on a lateral flange (21, 22) of said base section (20) of said trunking (10) increasing the height of said lateral flange (21, 22) and locally forming a length of trunking of greater height than said base section of said trunking, ensuring a continuity of members for mounting a length of cover section between the two heights of said lengths of trunking.

8. The trunking claimed in one of claims 1 to 7, **characterized in that** it includes another cheek adapted to establish a continuous wall between two dividing partitions with different heights attached to the back of each base section of said trunking, said other cheek including a strip ensuring a continuous wall between rims of said dividing partitions in which are mounted the lengths of cover section for closing the compartments of each base section, said strip including members for mounting said lengths of cover section extending along a line having at least two opposite curves to establish continuity between members for mounting a length of cover section situated at two different heights and to close the step formed between the lengths of trunking of different heights and a portion of each pair of butt-jointed compartments of said lengths of trunking using a single length of cover section with no interruption or visible edge or crease at the location of said step.

9. The trunking claimed in one of claims 1 to 8, **characterized in that** said members for mounting (31, 31C) a length of cover section (50) provided on each cheek (30) are substantially identical to the members for mounting (21D, 21E ; 22D, 22E) a length of cover section provided on said rims of said lateral flanges (21, 22) or said dividing partitions of each base section (20) of said trunking (10).

10. The trunking claimed in one of claims 4 to 9, **characterized in that** said members for mounting (42, 43) a length of cover section (50) provided on each height extender (40) are substantially identical to the members for mounting (21D, 21E ; 22D, 22E) a length of cover section (50) provided on the ribs (21C, 22C) of said lateral flanges (21, 22) of said base section of said trunking.

11. The trunking claimed in one of claims 1 to 10, **characterized in that** said members for mounting a length of cover section provided on said cheeks (30) include members for engaging (31) said length of cover section.

12. The trunking claimed in claim 11, **characterized in that** said engagement members on each cheek (30) include a groove (31) which ensures continuity of grooves (21D, 23D) provided on rims situated at different heights.

13. The trunking claimed in one of claims 1 to 12, **characterized in that** said members provided on each cheek (30) for mounting a length of cover section include clipping members (31C) for clipping said length of cover section.

14. The trunking claimed in claim 13, **characterized in that** said clipping members include, for each cheek (30), a clipping bead (31C) which ensures a continuity of clipping beads between clipping beads (21E, 23E) provided on rims at different heights.

15. The trunking claimed in one of claims 1 to 14, **characterized in that** said members for mounting cheeks (30) on said lateral flanges (21, 22) of said base section (20) of said trunking (10) are identical to the members for mounting (21D, 21E ; 22D, 22E) a length of cover section (50) on said rims (21C, 22C) of said lateral flanges (21, 22) of said base section (20) of said trunking (10).

16. The trunking claimed in one of claims 4 to 15, **characterized in that** said members for mounting (45, 46) a height extender (40) on a lateral flange (21, 22) of said base section (20) of said trunking (10) are substantially identical to said members for mounting (21D, 21E ; 22D, 22E) a length of cover section (50) on said rims (21C, 22C) of a lateral flange (21, 22) of said base section (20) of said trunking (10).

17. The trunking claimed in one of claims 1 to 16, **characterized in that** each cheek has a height that can be modified by cutting off a portion thereof along a particular cutting line to adapt the height of each cheek to those of said lateral flanges of lengths of trunking with different heights.
